# EUROPÄISCHE PATENTANMELDUNG

(11) **EP 3 132 768 A1**
(43) Veröffentlichungstag der Anmeldung: **22.02.2017**
(21) Anmeldenummer: 16183241.5
(22) Anmeldetag: 08.08.2016
(51) Int. Cl.: A61C 8/00

(54) **ADAPTIVES IMPLANTATSYSTEM**

(30) Priorität: 14.08.2015 DE 102015113422
(71) Anmelder: Fritsch, Tilman, 83457 Bayerisch Gmain (DE)
(72) Erfinder: Fritsch, Tilman, 83457 Bayerisch Gmain (DE)
(74) Vertreter: Patentanwälte und Rechtsanwalt Weiß, Arat & Partner mbB

(57) **Zusammenfassung**

Zahnimplantatsystem, mit einem Keramikimplantat (1), einem Abutment (7) und einem Zentralstift, wobei das Keramikimplantat (1) und das Abutment (7) über eine Nut (4) und eine Aufspreizmanschette (8) reversibel in Wirkverbindung stehen, wobei das Keramikimplantat (1) einen Kragen (5) umfasst und sich das Keramikimplantat (1) vom Kragen (5) bis zum Apex (3) parabelförmig verjüngt.

## Beschreibung

### Stand der Technik

Implantate und Implantat- Abutment - Verbindungen sind, in Verbindung mit den angewendeten Bohrsystemen, nach dem bekannten Stand der Technik starre Zahnimplantatsysteme. Das Einwachsverhalten in Abhängigkeit der Eigenschaften von metallischen Implantaten unterschiedet sich von keramischen bzw. anderer nichtmetallischer Implantaten deutlich. Aufgrund dieser wesentlichen Unterschiede ist eine andere planerische und operativtechnische Herangehensweise bei nichtmetallischen Systemen erforderlich. Dies betrifft besonders die das Bohren oder Fräsen des Implantatlagers im Kieferknochen, besonders wenn es um Sofortimplantationen geht. Aber auch bei Spätimplantationen ist eine geänderte Herangehensweise hilfreich, wenn es darum geht, perioperativ auf die vorhandenen Kochenverhältnisse, Knochenqualiteten und Platz-, bzw. Längenverhältnisse einzugehen. Bei vorhandenen Implantatsystemen ist Länge und Durchmesser als eine Konstante zu sehen, die in die biologische Struktur zu integrieren gilt. Diese fixen Parameter sollen durch das System "Adaption" aufgeweicht werden. Länge, Durchmesser gehen fließend ineinander über und integrieren sich in die vorhandenen Gegebenheiten.

Ferner trifft die Kaukraft die auf das Implantat ausgeübt wird bisher ungedämpft auf den Kieferknochen. Besonders stark geschieht das bei Implantatsystemen, die ausschließlich aus Keramikwerkstoffen bestehen, da Keramik härter und spröder im Vergleich zur den verwendeten metallischen Implantaten ist.

Ein gesunder Zahn hingegen weist eine physiologische Eigenbeweglichkeit auf, da er an desmodentalen Fasern im Knochenfach des Kiefers aufgehängt ist. Diese Tatsache führt zu einer natürlich gegeben Puffer- bzw. Dämpfungsfunktion die den Kaudruck, der über den Zahn auf den Kieferknochen übertragen wird, verringert. Durch die bisher fehlenden Dämpfungseigenschaften von Implantat- Abutment- Verbindungen aus Keramik oder Metall (Titan) sind häufig Verletzungen Traumata im Bereich des Kieferknochens aufgetreten. Folge dieser Traumata können dann Entzündungen oder Resorptionen des Knochens bis hin zu Frakturen des Implantats im Knochen führen. Weiterhin kann es durch den harten Werkstoff zu einem Kaureiz kommen der in Form einer neurologischen Schleife, welche bei Nutzern solcher Implantate dazu führen kann, dass sie zu sogenannte Bruxsern oder Knirschen werden. Um diesen Verletzungen vorzubeugen, wurden in der Vergangenheit versucht Kunststoffpuffer zwischen Implantat und Abutment zu platzieren, um den entstehenden Kaudruck auf den Kieferknochen abzufedern. Jedoch führte der schnelle Verlust der Resilienz dieser Puffer, also die nachhaltige Ermüdung, zur Aufgabe dieser Verbesserungsbestrebungen. Bisher sind Implantat- Abutment- Verbindungen daher ungedämpft.

Ein weiteres Problem bei herkömmlichen Implantat- Abutment- Verbindungen ist die allgemein übliche Zementierung, welche zur Befestigung dient. Der Zementspalt der bei der Befestigung entsteht, befindet sich meist an einer für die Behandlung sehr kritischen Stelle im Mundbereich, nämlich an der subgingialen Knochengrenze. Die spätere Entfernung dieser Zementbefestigung, bei Nachbehandlungen, ist sehr aufwendig, zeitintensiv und nicht risikolos.

Bei einer Sofortimplantation sind die Bedingungen für ein anzulegendes Implantatlager meist suboptimal. Erschwerend kommt bei metallischen Systemen hinzu, dass auf einen möglichst exakten Kontakt zwischen Implantat und Knochen zu achten ist. Daher ist die genaue Präparation des Knochens entscheidend für eine erfolgreiche Abheilung und das gewünschte Einwachsen des Implantats. In der Regel ist diese Präparation unter anderem durch den häufigen Wechsel von unterschiedlichen Bohr und Fräswerkzeugen zeitintensiv und erhöht das Kontaminationsrisiko.

Bei nichtmetallischen Systemen ist die genaue und formschlüssige Einpassung des Implantats in den Kieferknochen nicht von besonderer Bedeutung, viel mehr die definierte Primärstabilität. Bereiche des keramischen Implantats, die keinen Knochenkontakt aufweisen, und bei denen der Abstand zum Knochen nicht mehr 1 mm bis 1,5 mm beträgt, gelten eher als Wachstumsreiz für den Knochen, wodurch diese Distanzen durch Konchenwachstum geschlossen werden. Hier ist die Starrheit der Keramik ein positiver Leiteffekt für die Einheilung. Die "Unexaktheit", das heißt die ungenaue Einpassung, hat dadurch einen positiven Einheilungseffekt. Diesen Effekt gilt es zu nutzen.

Eine weitere Schwierigkeit bei herkömmlichen Implantaten aus Metall besteht darin, neben der genauen formschlüssigen Einpassung in das gebohrte bzw. gefräste Implantatlager des Kieferknochens, die exakte Einschraubtiefe und dabei den genauen Drehmoment zu treffen. Eine spätere Korrektur ist bisher kaum möglich.

Aufgabe der Erfindung ist es ein Implantatkonzept bestehend aus Bohrersystem, Implantatsystem und Adaptation der Ansprüche von Keramik und Knochen als Konzept bereitzustellen, das aus einem elipsoiden Formsystsme besteht, das sich in Fräse und der doppelellipse des Implantatkörpers wiederfindet. Die fixen Parameter von definierter Länge und Breite sollen durch das System "Adaption" aufgeweicht werden. Länge, Durchmesser gehen fließend ineinander über und integrieren sich in die vorhandenen Gegebenheiten. In der Folge, eine Implantat- Abutment-Verbindung mit resilienter Dämpffunktion bereitzustellen, die der natürlichen und individuellen Dämpfungswirkung eines gesunden Zahns entspricht. Eine weitere Aufgabe der Erfindung ist die Vermeidung von Zahnzement als Befestigungsmittel.

### Offenbarung der Erfindung

Die vorliegende Erfindung betrifft ein adaptives Implantatsystem für eine Sofortsowie eine Spätimplantation auf der Grundlage eines keramischen Implantates und eines Abutments aus einem oder mehreren Kunststoffen. Das adaptive Implantatkonzept beinhaltet folgende Elemente: ein Bohrkonzept/system, ein erfindungsgemäßes Keramikimplantat sowie ein erfindungsgemäßes Abutment.

Da bei nichtmetallischen Implantaten, vorzugsweise Keramikimplantaten, ein weniger genau angepasstes Implantatlager im Kieferknochen zu positiven Einheilungseffekten führt, ist der für das vorliegende Implantatsystem entwickelte und auf das erfindungsgemäße Keramikimplantat abgestimmter Finalbohrer mit besonders ausgeformten Sägezacken ausgestattet. Dies Fräse kann auf übliche Weise rotierend, aber auch per Ultraschall- angetrieben werden. Die Abmessungen und Ausformung der Fräse entspricht dabei genau den Abmessungen des Keramikimplantats. Diese besondere Ausformung der Fräse, welche mit den Lindemannfräsen verglichen werden kann, führt zu einer gezielt herbeigeführten Ungenauigkeit bei der Schaffung des Implantatlagers. Diese Ungenauigkeit hat zur Folge, dass die Knochensubstanz des gefrästen Implantatlagers eine raue Oberfläche aufweist.

Dies birgt folgende Vorteile:
- Durch die raue Knochenoberfläche des Implantatlagers ist die Knochenhärte, bedingt durch das teilweise abgetragene Knochenmaterial, an den Stellen an denen der Knochen im Kontakt zum Implantat steht verringert. Dies ermöglicht eine vereinfachte Implantation.
- Durch die raue Knochenoberfläche des Implantatlagers ist die Oberfläche des Implantatlagers im Kieferknochen deutlich erhöht und bietet dadurch größere Benetzbarkeit bez. mehr Raum für die knochenbildenden Osteoblasten. Dadurch erfolgt eine schnellere und verbesserte Abheilung
- Durch das einfache Bohrkonzept und die auf die Form des Implantats bezogenen Fräsenform, sind im Vergleich zu herkömmlichen Bohr- und Fräsverfahren deutlich weniger Bohrwerkzeuge nötig. Dies erspart Zeit und lindert für den Patienten den Eingriff.
- Dadurch, dass die parabelförmige Abmessung der Fräse der doppelt überlagertenten eliptoiden Form des Keramikimplantats entspricht und die Keramikimplantatspitze (Apex) entfernt ist, ist die Implantation lediglich von dem einfach zu erfassenden Drehmoment abhängig. Dies relativiert planerische Messungen vorab, die oft gerade bei Sofortimplantationen raltiviert werden müssen. Dies erleichtert vor allem die Sofortimplantation immens.

Das erfindungsgemäße Keramikimplantat ist mit Verankerungsriefen bzw. Gewindesteigungen ausgestattet. Diese Verankerungsriefen bzw. Gewindesteigungen erleichtern die dauerhafte Primärstabilität im Kieferknochen und verhindern ein ungewolltes Lösen des Implantats in der Abheilungsphase. Besonders bei nicht-zementierten Implantatsystemen ist die dadurch erreichte Primärstabilität von entscheidender Wichtigkeit und Voraussetzung für die Osseointegration.

Die Form des Keramikimplantats gestaltet sich in vertikalem Querschnitt eliptoied-oder parabelähnlich. Gewindespitzen und Implantatkörper besitzen die gleiche Formgebung als verschobene Elipsen. Das Gewinde füllt den Raum von einer parabolischen Elipse zur zweiten, dem Implantatkörper, sozusagen auf. Auf diese Weise ist es möglich, je nach Knochenqualität, die individuell vorteilhafteste Primärstabilität des Implantats im gefrästen Implantatlager zu erreichen, da im Bereich der Überlagerung der Elipsen immer die gleiche Formgebung vorhanden ist. Je nach Knochenqualität nimmt mehr Implantatkörper oder mehr Gewindebereich das gebohrte Lager in Anspruch, je nach Vorhandensein der Möglichkeiten.

Die entsprechend eliptiod-parabelförmige Fräse hat die Abmessung des Keramikimplantats Dabei sind auch, je nach Knochenbeschaffenheit, leichte Dimensionsänderungen der Fräse denkbar.

Um die Primärstabilität weiter zu verbessern und das Implantat leichter in das Implantatlager zu integrieren, ist die Spitze des Implantats, der sogenannte Apex, konkav abgesetzt. So ist es möglich das Implantat, je nach spezifischen und individuellen Gegebenheiten bestmöglich zu platzieren. Ein weiterer Vorteil des konvexen Apex ist, dass die exakte Höhe des Implantats nicht mehr definiert werden muss. Diese ergibt sich im Implantationsvorgang. Die Höhendifferenz wird durch den Schaft am Implantatkragen ausgeglichen. Dieser Implantatkragen weißt sowohl mit dem Knochen als auch mit dem Zahnfleisch ein vorteilhaftes Einwachsverhalten durch eine besonders gestaltete Oberflächenbeschaffenheit auf.

Der Schaft am Implantatkragen ist abgeschrägt, um im Zuge des Plattform-Switching für Bone-Level, wie auch für Tissue-Level Möglichkeiten zu liefern.

Hierbei gibt es folgende drei Möglichkeiten:
1. Abutment mit Kronenrand am Implantatrand für Tissue-Level
2. Abutment mit Auflage auf Implantatrand für Bone-Level
3. Einphasenimplantat mit Retention für ein Zwischenstück zwischen Implantat und Krone vorzugsweise im Frontzahnbereich.

Das Abutment aus einem oder mehreren synthetischen Kunststoffen mit geeigneter bzw. angepasster Restelastizität, ggf. faserverstärkt, ist in dem enossalem Keramikimplantat reversibel zu befestigen. Neben der Verwendung von den synthetischen Kunststoffen Polyetherehterketon (PEEK) und Polyaryletherketon (PAEK), ist auch denkbar, dass folgende Kunststoffe bzw. Kunststoffmischungen für das Abutment verwendet werden können: Polyethylen, Polypropylen, Polyacrylat, Polymethacrylat, Polyacrylnitril, Polybutadien, Polyamid, Polyester, Polyether, Polyetherketone, Polyvinylacetate, Polyacetable, Polyvinylacetate, Polyolefine, Polycarbonat, Polyether-Block-Amide, PSU, PES, PPS, PVC, PVDC, PET, PS, PTFE, PVDF, POM, Polyimide, Polyimid-Derivate, Cellulosederivate und Copolymerisate.

Durch gezielte und angepasste Auswahl bzw. Mischung von Kunststoffen für das Abutment und oder den Zentralstift, wird die Biomechanik eines natürlichen Zahnes weitgehend nachempfunden. Anhand von Messungen der individuellen, physiologischen Gegebenheiten des Kauapparates der Patienten wird die Materialzusammensetzung der einzelnen Bestandteile, mit Ausnahme des Keramikimplantats, ermittelt. So ist ein gezieltes Anpassen der Dämpfungseigenschaften an individuelle Belastungsverhältnisse im Mund des Patienten möglich.

Das Abutment wird über einen Klickmechanismus mit dem Keramikimplantat formschlüssig und reversibel in Wirkverbindung gebracht. Das Abutment kann wahlweise zementiert, gesteckt, oder verschraubt werden, wobei die Verschraubung im Abutment oder im Keramikimplantat stattfinden kann. Dazu weist das Abutment am unteren Ende eine ringförmige Aufspreizmanschette auf, die mit Entlastungsschlitzen ausgestattet ist. Das Keramikimplantat umfasst entsprechend eine dafür vorgesehene Nut, in die sich das Abutment über die Aufspreizmanschette reversibel und formschlüssig einfügt. Der Vorteil dieser Wirkverbindung ist, dass sie nicht zementiert werden muss. Ist es gewünscht kann jedoch unnötigerweise zusätzlich zementiert werden. Damit eine Rückstellung der Klickverbindung zwischen Abutment und Keramikimplantat auch bei starker Belastung ausgeschlossen ist, wird ein Zentralstift aus Metall, Titan, Magensiulegierung, Keramik oder ggf. faserverstärktem Kunststoff durch das Abutment in das Keramikimplantat geschraubt, selbsthämmend gesteckt oder auch zementiert. Dadurch ist die Verbindung vor Abzugskräften gesichert. Anstelle eines Zentralstiftes kann auch eine Zentralschraube verwendet werden, die entweder nur im Keramikimplantat, nur im Abutment oder in beiden verankert bzw. verschraubt wird.

Über die gewählten Materialien und die Zusammensetzung des Abutments und des Zentralstiftes bzw. der Zentralschraube, werden die mechanischen Eigenschaften der Biomechanik eines natürlich gesunden Zahns im Kieferknochen nachempfunden. Wesentlich hierbei ist die Verwendung von ggf. faserverstärktem Kunststoffen wie beispielsweise Polyetherehterketon PEEK, Polyaryletherketon PAEK oder anderen bereits oben angeführten Kunststoffen. Durch die Messung individueller physiologischer Gegebenheiten des Kauapparates eines Patienten, die auf verschiedenen Belastungsverhältnissen im Mund basieren, ist eine Abstimmung der nötigen Resilienzkapazität bzw. Pufferfunktion oder Dämpfungsfunktion dieser Implantat- Abutment-Verbindung, insbesondere des Abutments möglich. Dadurch wird die Biomechanik eines Zahnes mit seiner Eigendynamik in der natürlichen Alveolentverankerung imitiert, wodurch Verletzungen Traumata mit den oben beschriebenen Folgen für den des Kieferknochens durch Überbeanspruchung weitgehend verhindert werden.

Das erfindungsgemäße adaptive Implantatsystem, mit einem Keramikimplantat, einem Abutment und einem Zentralstift, hat den Vorteil, dass das Keramikimplantat und das Abutment über eine Klickverbindung reversibel in Wirkverbindung stehen. Dies ermöglicht eine zementfreie Befestigung und erleichtert dadurch deutlich den vorzunehmenden zahnärztlichen Eingriff. Zudem verkürzt sich die Behandlungsdauer, was die Behandlung für den Patienten deutlich angenehmer macht.

In einem weiteren erfindungsgemäßen Ausführungsbeispiel sind das Abutment und der Zentralstift faserverstärkt. Durch eine Faserverstärkung kann die Widerstandskraft des Zahnimplantates weiter erhöht werden. Dabei umgibt eine Matrix, in dem Fall ein Synthetische Kunststoff die Fasern, die durch Adhäsiv- oder Kohäsivkräfte an die Matrix gebunden sind. Durch die Verwendung von Faserwerkstoffen ergibt ein richtungsabhängiges Elastizitätsverhalten, was bei Zahnimplantaten, durch die spezifischen Druckbelastungen, von wesentlicher Bedeutung ist. Faser-Kunststoff-Verbunde weisen in der Regel hohe spezifische Steifigkeiten und Festigkeiten auf. Zudem ist es denkbar, dass nur einzelne Bestandteile nach individuellem Bedarf faserverstärkt werden oder sein können. Da die Fasern je nach Beanspruchung ausgerichtet sind, und in ihrer Dichte angepasst werden können, entstehen mit Hilfe entsprechender Herstellungsverfahren auf den Patienten maßgeschneiderte Zahnimplantate.

Die Aufspreizmanschette des Abutments ermöglicht in Verbindung mit einer innenliegenden Nut des Keramikimplantats eine Wirkverbindung in Form einer reversiblen Klickverbindung. Der Anstellwinkel zwischen Keramikimplantat und Abutment ist Formschlussgebend und beträgt 1 bis 10 Grad, vorzugsweise 3 Grad. Diese Klickverbindung ermöglicht eine zementfreie Befestigung und ermöglicht zudem auch eine einfache Lösung dieser Befestigung durch den Zahnarzt, wenn dies aufgrund von Nachbehandlungen nötig ist. Ein aufwendiges, langwieriges und für den Patienten schmerzhaftes Entfernen von Zementbefestigung entfällt. Zudem wird die Gefahr von durch den Zahnarzt versehentlich bei der Beseitigung von Zementverbindungen verursachten Zahnfleischverletzungen reduziert.

Eine zusätzliche Sicherheit neben der Klickverbindung des Zahnimplantats bildet der Zentralstift. Er wird durch das Abutment in das Keramikimplantat eingeführt. Dabei sind die unterschiedlichsten Ausführungsformen denkbar. So kann der Zentralstift im Abutment und/ oder im Keramikimplantat befestigt werden. Die Befestigung kann dabei über eine Verschraubung, eine selbsthämmende Steckverbindung oder andere denkbare Verbindungssysteme erfolgen. Dabei ist vorteilhaft, dass der Zahnarzt flexibel handeln kann und die am besten passende Befestigung zum jeweiligen medizinischen Befund anwenden kann. Dies ist bei vor allem verhältnismäßig kleinen Unterkieferknochen wesentlich.

Bei einem Monolitimplantat existieren Retentionen im Eindrehbereich des Implantats, welche für eine Kunststoffzwischenhülse verwendet werden können.

Denkbar ist zudem, dass das Implantat nicht nur aus Keramik, sondern auch aus einer speziellen Metalllegierung bestehen kann. Dabei könnte es sich zum Beispiel um eine besondere Magnesiumlegierung handeln, welche ebenfalls wie Keramik besondere Vorteile beim Einwachsverhalten in den Knochen aufweisen könnte.

### Figurenbeschreibung

Folgend werden bevorzugte Ausführungsformen der Erfindung anhand angefügter Zeichnungen erläutert:
Figur 1 zeigt eine schematische und zum Teil durchsichtige Darstellung eines erfindungsgemäßen Keramikimplantats.
Figur 2 zeigt eine schematische und zum Teil durchsichtige Darstellung einer Ausführungsform eines erfindungsgemäßen Abutments.

### Beschreibung bevorzugter Ausführungsformen

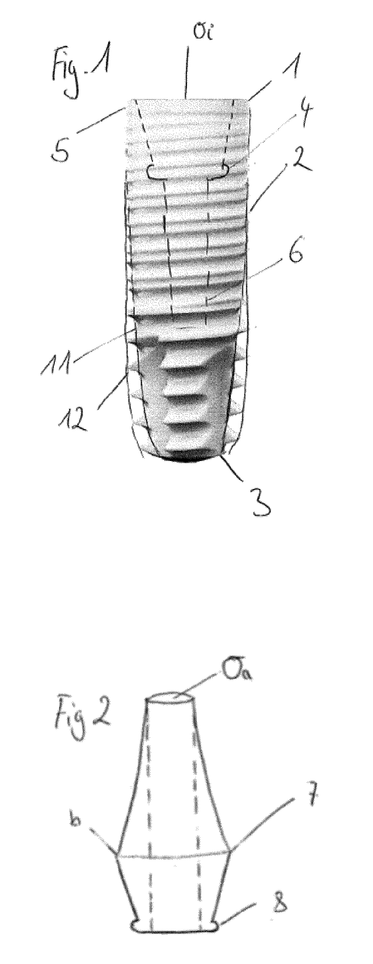

Figur 1 zeigt eine schematische und teils durchsichtige Darstellung eines erfindungsgemäßen Keramikimplantats 1. Gestrichelt dargestellt ist die innere Ausformung des Keramikimplantats 1, welche ansonsten aus dieser Blickrichtung nicht zu sehen wäre. Das Keramikimplantat 1 verfügt an der Oberseite Oi über einen Kragen 5 welcher eine derart gestaltete Oberfläche aufweist, dass sowohl Knochen als auch Zahnfleisch ein besonders gutes Einwachsverhalten aufweisen. An der, der Oberseite Oi gegenüberliegenden Seite befindet sich eine konvex abgesetzte Spitze, der Apex 3. Dieser ermöglicht eine erleichterte Implantation des Keramikimplantats in das Implantatlager. Das Keramikimplantat 1 ist unterhalb des Kragens 5 bis zum Apex 3 doppelt parabelförmig gestaltet; durch eine erste ellipsoide Parabelform 11 und eine zweite Parabelform 12. Diese beiden parabelförmigen Außenabmessungen werden durch die Verankerungsriefen bzw. Gewindesteigungen 2 gebildet. Die Abmessungen der entsprechenden Fräse entspricht dabei den Abmessungen der ersten Parabelform 11 des Keramikimplantats 1. Die Öffnung an der Oberseite Oi ist breiter als an der Nut 4. Die Öffnung für das Abutment 7 verjüngt sich daher von der Oberseite Oi in einem Winkel von 1 bis 10 Grad, vorzugsweise um 3 Grad, bis zu der innenliegenden Nut 4. Diese Nut 4 ist formschlüssig mit der entsprechenden Aufspreizmanschette 8 des nicht dargestellten Abutments (siehe Fig. 2) und bildet damit eine Klickverbindung. Der unterhalb der Nut 4 liegende Freiraum 6 bietet, je nach Ausführungsform, Ansatztfläche für einen nicht dargestellten Zentralstift oder eine Zentralschraube.

In Figur 2 ist eine schematische und teils durchsichtige Seitenansicht eines erfindungsgemäßen Abutments 7 dargestellt. Das Abutment 7 besteht aus einem Kunststoff oder einer Kunststoffmischung, vorzugsweise PEEK und/oder PEAK. Bei dem Abutment 7 handelt es sich um die Gingiva-level Version, welche ein Ausführungsbeispiel, neben zum Beispiel der Bone-leverl Version, darstellt. Es ist röhrenartig, für die Durchführung eines nicht dargestellten Zentralstifts oder einer Zentralschraube, aufgebaut. Das Abutment 7 nimmt im äußeren Durchmesser von der breitesten Stelle b bis hin zur Oberseite Oa leicht kurvenförmig ab.

Das Abutment 7 verfügt an der Seite, mit der es formschlüssig in das Keramikimplantat 1 eingesetzt wird, über eine ringförmige Aufspreizmanschette 8. Entsprechend der Nut 4 im Keramikimplantat 1, siehe Fig. 1, verjüngt sich das Abutment 7 von der breitesten Stelle b bis zur Aufspreizmanschette 8 in einem Winkel von 1 bis 10 Grad, vorzugsweise um 3 Grad. Diese Aufspreizmanschette 8 ermöglicht in Wirkverbindung mit der Nut 4 des Keramikimplantats 1 eine formschlüssige Klickverbindung, die Abzugskräften entgegensteht. Die Aufspreizmanschette 8 ist zudem durch Entlastungsschlitze unterbrochen, die in der schematischen Figur 2 darstellungsbedingt nicht zu erkennen sind.

**Bezugszeichenliste**

| | | | | | |
|---|---|---|---|---|---|
| 1 | Keramikimplantat | 34 | | 67 | |
| 2 | Verankerungsriefen/ Gewindesteigung | 35 | | 68 | |
| 3 | Apex | 36 | | 69 | |
| 4 | Nut | 37 | | 70 | |
| 5 | Kragen | 38 | | 71 | |
| 6 | Freiraum | 39 | | 72 | |
| 7 | Abutment | 40 | | 73 | |
| 8 | Aufspreizmanschette | 41 | | 74 | |
| Oi | Oberseite Implantat | 42 | | 75 | |
| Oa | Oberseite Abutment | 43 | | 76 | |
| 11 | erste ellipsoide Parabelform | 44 | | 77 | |
| 12 | zweite ellipsoide Parabelform | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Zahnimplantatsystem, mit einem Keramikimplantat (1), einem Abutment (7) und einem Zentralstift, **dadurch gekennzeichnet,**
**dass** das Keramikimplantat (1) und das Abutment (7) über eine Nut (4) und eine Aufspreizmanschette (8) reversibel in Wirkverbindung stehen, wobei das Keramikimplantat (1) einen Kragen (5) umfasst und sich das Keramikimplantat (1) vom Kragen (5) bis zum Apex (3) parabelförmig verjüngt.

2. Zahnimplantatsystem nach Anspruch 1, **dadurch gekennzeichnet, dass** das Abutment (7) aus einem ersten oder einem weiteren Kunststoff und das Keramikimplantat (1) aus einer Keramik besteht.

3. Zahnimplantatsystem nach einem der vorigen Ansprüche, **dadurch gekennzeichnet, dass** es sich bei dem ersten Kunststoff um Polyetherehterketon (PEEK) und bei dem weiteren Kunststoff um Polyaryletherketon (PAEK) handelt.

4. Zahnimplantatsystem nach einem der vorigen Ansprüche 2 bis 3, **dadurch gekennzeichnet, dass** der erste Kunststoff und/oder der weitere Kunststoff faserverstärkt sind.

5. Zahnimplantatsystem nach einem der vorigen Ansprüche, **dadurch gekennzeichnet, dass** das Abutment (7) eine Aufspreizmanschette (8) umfasst.

6. Zahnimplantatsystem nach einem der vorherigen Ansprüche, **dadurch gekennzeichnet, dass** das Abutment (7) an der Stelle (b) breiter ist als an der Aufspreizmanschette (8).

7. Zahnimplantatsystem nach einem der vorigen Ansprüche, **dadurch gekennzeichnet, dass** das Keramikimplantat (1) eine innenliegende Nut (4) umfasst.

8. Zahnimplantatsystem nach einem der vorherigen Ansprüche, **dadurch gekennzeichnet, dass** die Öffnung des Keramikimplantats (1) an der Oberseite (Oi) breiter ist als an der Nut (4).

9. Zahnimplantatsystem nach einem der vorherigen Ansprüche, **dadurch gekennzeichnet, dass** das Keramikimplantat (1) über eine Nut (4) mit der Aufspreizmanschette (8) des Abutments (7) klickverbindbar sind.

10. Zahnimplantatsystem nach einem der vorigen Ansprüche, **dadurch gekennzeichnet, dass** das Keramikimplantat (1) Verankerungsriefen/ Gewindesteigungen (2) umfasst.

11. Zahnimplantatsystem nach einem der vorigen Ansprüche, **dadurch gekennzeichnet, dass** das Keramikimplantat (1) einen konkav ausgelassenen Apex (3) aufweist.

12. Zahnimplantatsystem nach einem der vorigen Ansprüche, **dadurch gekennzeichnet, dass** ein Zentralstift in das Abutment (7) und/oder das Keramikimplantat (1) einführbar ist.

13. Zahnimplantatsystem nach einem der vorigen Ansprüche , **dadurch gekennzeichnet, dass** ein Zentralstift im Abutment (7) und/oder in dem Keramikimplantat (1) befestigbar ist.

14. Verfahren für ein Zahnimplantatsystem zum Implantieren eines Keramikimplantats (1) in einen Kieferknochen, wobei eine Rundkopfsägefräse nach Lindemann anzuwenden ist, wobei das Implantatlager damit derart auszuformen ist, dass das Keramikimplantat (1) nach der Implantierung zunächst keinen umfänglichen Kontakt mit dem Knochen aufweist.
